# NEW EUROPEAN PATENT SPECIFICATION

(11) **EP 0 849 157 B2**
(45) Date of publication and mention of the opposition decision: **17.12.2008**
(45) Mention of the grant of the patent: 28.07.2004
(21) Application number: 97310352.6
(22) Date of filing: 19.12.1997
(51) Int. Cl.: B62M 25/04, B62K 23/06

(54) **Bicycle shifting control apparatus**
Steuerungseinrichtung für eine Fahrradgangschaltung
Dispositif de commande de changement de vitesse pour bicyclette

(30) Priority: 19.12.1996 JP 34001696
(43) Date of publication of application: 24.06.1998
(73) Proprietor: SHIMANO INC., Osaka 590-8577 (JP)
(72) Inventor: Ose, Kenji, Sakai-shi, Osaka (JP); Takahashi, Noriaki, Sakai-shi, Osaka (JP)
(74) Representative: Murnane, Graham John

(56) References cited:
- EP-A- 0 719 701
- EP-B1- 0 849 150
- US-A- 4 245 522
- US-A- 5 361 645
- US-A1- 3 901 095

## Description

### BACKGROUND OF THE INVENTION

The present invention is directed to bicycle control devices and, more particularly, to a bicycle shifting apparatus having multiple remotely located levers for operating a single bicycle transmission.

Bicycles are typically equipped with a multistage front chain wheel in front and a multistage sprocket in the rear. These are connected by a chain, which provides rotational torque. The optimal gear ratio is selected, depending on the running speed, by selecting the multistage front chain wheel and multistage sprocket around which the chain is to be engaged. The shifting operations normally involve the operation of a shifting lever which can be operated from the grip position of the handle bars.

Many types of bicycle handle bars are shaped to provide for many different grip positions. For example, one position may be provided for riding at normal speed, and another position may be provided for riding at high speed, such as on hill roads, and usually designed to ward off wind resistance. Unfortunately, conventional shifting control devices are located only in a specific grip position. Thus, when the grip position is changed, it is not possible to control the shifting from the new position, making it necessary to move back to the original grip position in order to shift. Moving the hands back and forth and locating the proper grip positions wastes time and hinders high performance riding.

EP 0 719 701 discloses a bicycle shifting apparatus which allows shifting to be accomplished from different positions on the handle bars. A first shifting control device controlling a first cable is located at a first position, and a second shifting control device controlling a second cable is located at a second position. An interlocking mechanism such as a cable fixing bolt or joint locks the cables. US 5,361,645 discloses a shift lever apparatus with two switch levers controlling a single control cable, for shifting gear upward or downward respectively.

### SUMMARY OF THE INVENTION

According to a first aspect of the present invention there is provided a bicycle shifting control apparatus for a bicycle transmission according to claim 1.

Interlocking may be accomplished in a number of ways. In one specific embodiment which may be applied to a first shifting control device of the type which has one lever for upshifting the bicycle transmission and another lever for downshifting the bicycle transmission, the second shifting control device may include one or two levers for controlling two transmission elements, wherein each transmission element is connected to one of the levers on the first shifting control device.

### BRIEF DESCRIPTION OF THE DRAWINGS

Figure 1 is an oblique view of handle bars provided with another alternative embodiment of a bicycle shifting control mechanism according to the present invention;
Figure 2 is an oblique detailed view of the left side of the handlebar shown in Figure 1;
Figure 3 is a front view of a first shifting control device shown in Figure 1;
Figure 4 is a rear view of a first shifting control device shown in Figure 1;
Figure 5 is an internal view of the first shifting control device shown in Figure 1;
Figure 6 is an internal cross sectional view of the first shifting control device shown in Figure 1;
Figure 7 is a side view of a second shifting control device shown in Figure 1;
Figure 8 is a view taken along line XX-XX in Figure 7;
Figure 9 is a view taken along line XXI-XXI in Figure 7;
Figure 10 is a side view of an alternative embodiment of a second shifting control device which may be used with the first shifting control device shown in Figure 1;
Figure 11 is a view taken along line XXIII-XXIII in Figure 10;
Figure 12 is a side view of another alternative embodiment of a second shifting control device which may be used with the first shifting control device shown in Figure 1;
Figure 13 is a view taken along line XXV-XXV in Figure 12;
Figure 14 is a view illustrating the operation of the second shifting control device shown in Figure 12;
Figure 15 is a cross sectional view of another alternative embodiment of a second shifting control device similar to the device shown in Figure 12; and
Figure 16 is an oblique detail view of the right side portion of the handlebar for another alternative embodiment of a bicycle shifting control mechanism according to the present invention.

### DETAILED DESCRIPTION OF THE EMBODIMENTS

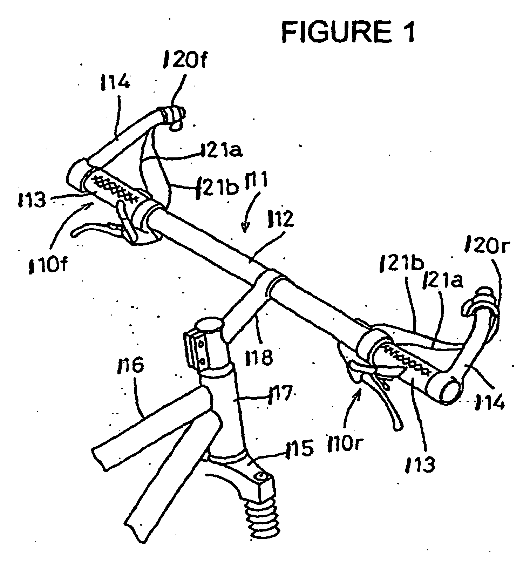

Figure 1 is an oblique view of handle bars provided with an embodiment of a bicycle shifting control mechanism according to the present invention. In Figure 1, main shift control devices 110f and 110r pertaining to an embodiment of the present invention are mounted on both ends of a main bar 112 that extends to the left and right of a handlebar 111. In addition to the main shift control devices 110f and 110r, grips 113 are mounted to the outside thereof on the main bar 112. Bar ends 114 that make up part of the handlebar 111 are mounted to the outside of the grips 113. The bar ends 114 are mounted facing forward and upward on the ends of the main bar 112. The main bar 112 is attached to the distal end of a stem 118. The base end of the stem 118 is mounted to the upper end of a suspension fork 115 such that it sandwiches the head component 117 at the distal end of a bicycle frame 116.

Auxiliary shift control devices 120f and 120r that are used for the remote operation of the front and rear main shift control devices 110f and 110r are mounted to the distal ends of the bar ends 114. These auxiliary shift control devices 120f and 120r are linked to the main shift control devices 110f and 110r by two control cables 121a and 121b, respectively.

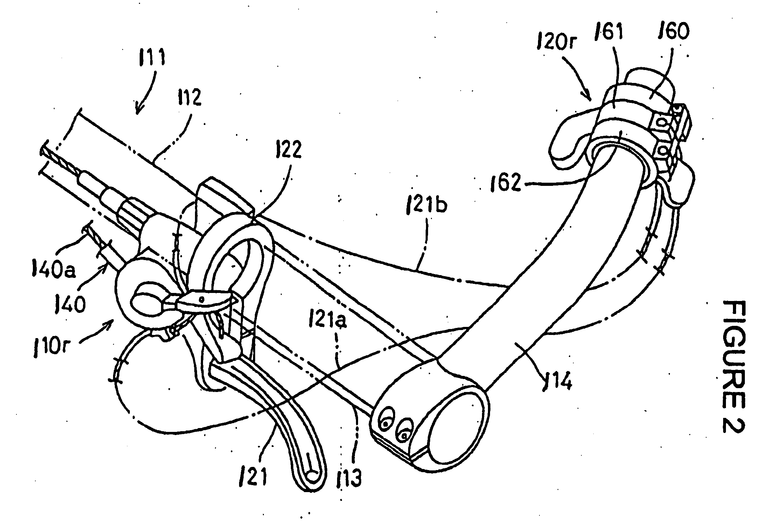

As shown in Figures 2 through 4, the main shift control devices 110f and 110r are integrated with brake levers 121, and they are mounted underneath the main bar 112 via brake brackets 122 that swingably support the brake levers 121. The main shift control device 1 10r, which is used for rear shifts, will be described below.

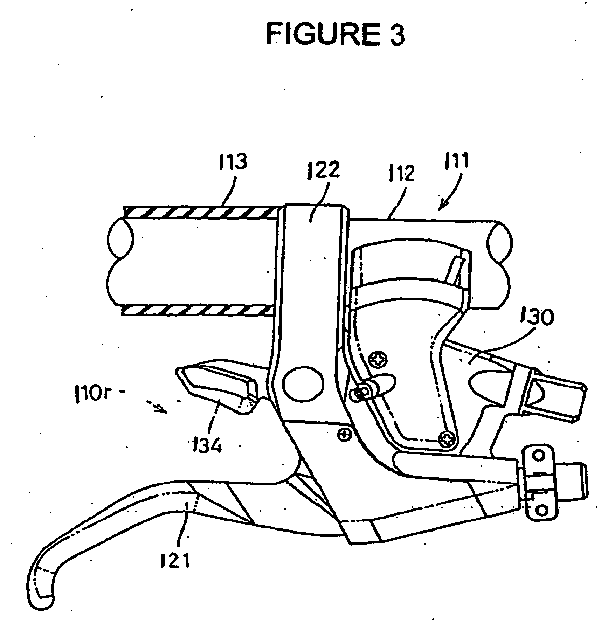

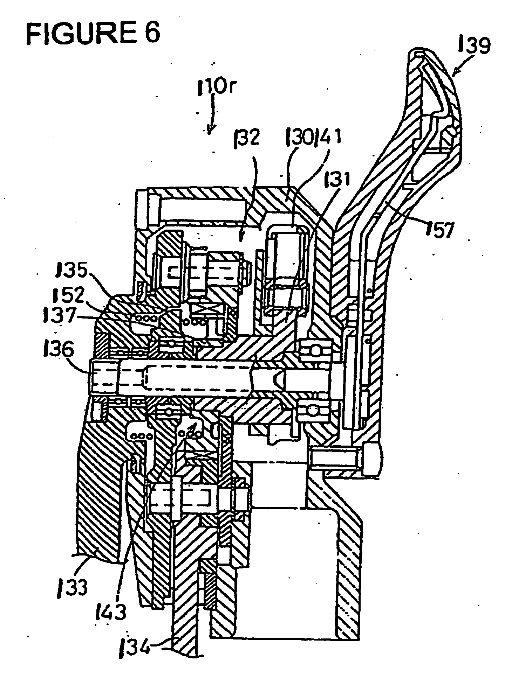

As shown in Figures 3 through 6, the main shift control device 110r comprises a main control bracket 130 that is formed integrally with a brake bracket 122; a winder 131 that is positioned in the interior of the main control bracket 130 and is rotatably supported by the main control bracket 130; a positioning mechanism 132 for setting the rotational position of the winder 131 in stages; a first shift lever 133 that is used to operate the winder 131 rotationally; a release mechanism 143 for releasing the setting of the rotational position of the winder 131; and a torsion coil spring 135 for energizing the winder 131 in the opposite direction from the winding direction. The main shift control device 110r also has a display 130 for displaying the rotational position.

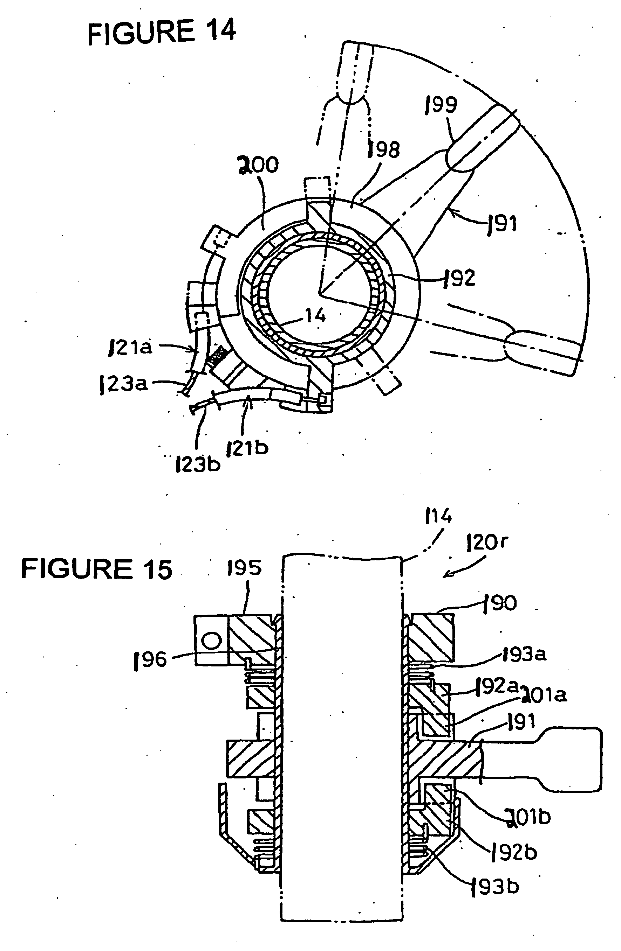

The winder 131 has a shift cable stopping component 141 that is used to stop the inner cable 140a of a shift cable (Figure 14) connected to a rear derailleur (not shown). The winder 131 also has around its periphery a cable guide 142 that guides the wound inner cable 140a. The winder 131 is fixed to a rotating shaft 136 rotatably supported by a bearing on the main control bracket 130. Also fixed to the winder 131 is a shift gear 137 that constitutes the positioning mechanism 132 and on the peripheral surface of which are formed serrated feed teeth and positioning teeth.

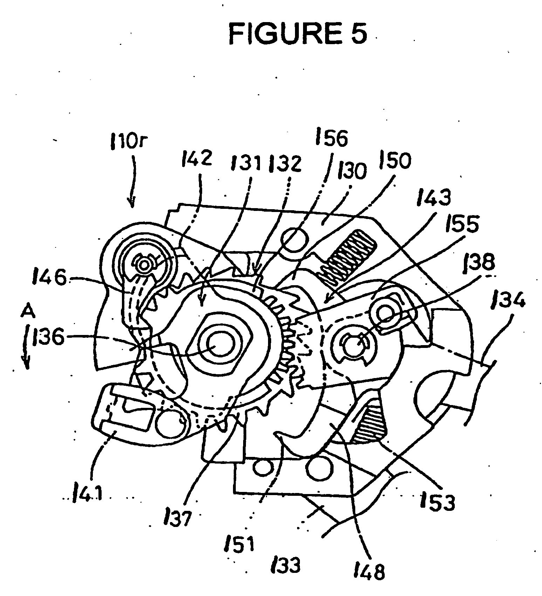

The first shift lever 133 is rotatably mounted to the rotating shaft 136. The first shift lever 133 is energized in the opposite direction from the operation direction by a torsion coil spring 152. A control component 145 is formed at the distal end of the first shift lever 133. A feed pawl 146 is rotatably mounted at a point where the first shift lever 133 is positioned inside the main control bracket 130. The feed pawl 146 is energized such that its distal end can come into contact with the feed teeth of the shift gear 137. When this first shift lever 133 is rotated in the direction of arrow A in Figure 5, the feed pawl 146 engages with the feed teeth, the shift gear 137 is engaged, and the winder 131 is rotated in the winding direction.

The second shift lever 134 has a control component 147 on its distal end. The second shift lever 134 is energized in the opposite direction from the operation direction by a spring 153. The second shift lever 134 is rotatably supported on a rotating shaft 138 embedded in the main control bracket 130. A release pawl 150 and a positioning pawl 151, which are actuated in conjunction with the second shift lever 134, and which constitute the release mechanism 143, are provided at the rotational center of the second shift lever 134. The release pawl 150 and positioning pawl 151 position the winder 131 by selectively stopping the positioning teeth formed on the peripheral surface of the shift gear 137. The release pawl 150 is energized in the direction of the shift gear 137 by a spring 154, the state of stoppage to the shift gear 137 is released by rotational actuation of the second shift lever 134, and the positioning pawl 151 is stopped to the shift gear 137 simultaneously with this release. When the second shift lever 134 returns to its original position as a result of its energization by the spring 152, the release pawl 150 is stopped to the positioning teeth of the shift gear 137, and the winder 131 is positioned in a state in which the inner cable has been played out by one tooth of the positioning teeth. The positioning pawl 151 comes out at this point.

A feed pawl release mechanism 155 that works in conjunction with the second shift lever 134 is provided at the rotational center of the second shift lever 134. The feed pawl release mechanism 155 rotates a feed pawl release gear 156, which is rotatably supported on the rotating shaft 136, according to the rotation of the second shift lever 134, and rotates the feed pawl 146 to the position where it disengages from the shift gear 137.

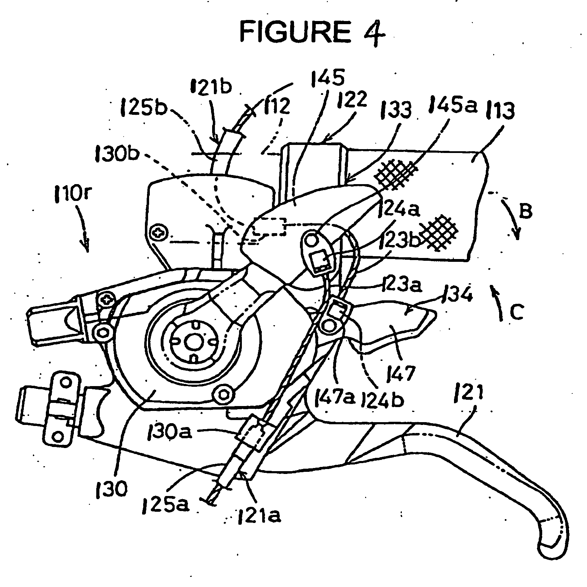

The first shift lever 133 and second shift lever 134 rotate in opposite directions from one another. Specifically, in Figure 4, the first shift lever 133 rotates in the direction of arrow B, while the second shift lever 134 rotates in the direction of arrow C. The positions after this rotation are close to each other. Inner cable stopping components 145a and 147a that stop the inner cables 123a and 123b of the control cables 121a and 121 b are provided to the control component 145 of the first shift lever 133 and the control component 147 of the second shift lever 134, respectively. The inner cable stopping components 145a and 147a are designed to stop drums 124a and 124b fixed to the distal ends of the inner cables 123a and 123b. Outer stopping components 130a and 130b, which are used to stop the outer casings 125a and 125b of the control cables 121a and 121b, are provided to the main control bracket 130. The outer stopping component 130a is provided to the lower portion of the main control bracket 130 in Figure 4, and the outer stopping component 130b is formed at the boundary between the brake bracket 122 and the main control bracket 130.

A display 139 has an indicator needle 157 mounted at the distal end of the rotating shaft 136. The indicator needle 157 is linked to one end of the rotating shaft 136, and rotates to display the shift position.

The auxiliary shift control devices 120f and 120r will now be described. The following description will be for the auxiliary shift control device 120r linked to the main shift control device 110r for rear shifting.

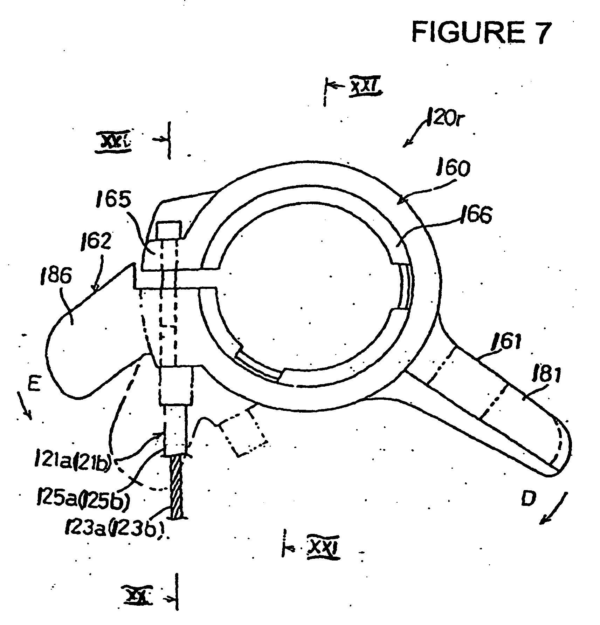

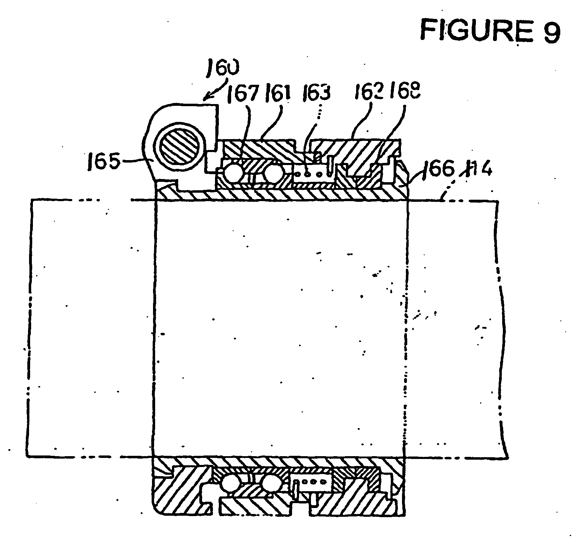

As shown in Figures 7 to 9, the auxiliary shift control device 120r comprises an auxiliary control bracket 160 mounted to the distal end of the bar end 114 that makes up part of the handlebar 111, a first auxiliary shift lever 161 rotatably supported by the auxiliary control bracket 160, a second auxiliary shift lever 162 rotatably supported by the auxiliary control bracket 160 next to the first auxiliary shift lever 161, and a torsion coil spring 163 that is used to return these auxiliary shift levers 161 and 162 to specific positions.

The auxiliary control bracket 160 has a ring-shaped fastening component 165 that has a groove formed in its radial direction, and a tube 166 that is fixed to the bar end 114 by the fastening component 165. A bearing 167 is installed around the outer periphery of the tube 166, and the first auxiliary shift lever 161 is rotatably supported via this bearing 167. A bushing 168 is installed around the outer periphery of the tube 166 at a distance from the bearing 167 in the axial direction, and the second auxiliary shift lever 162 is rotatably supported by the bushing 168. A return-use torsion coil spring 163 is installed in a twisted state between the bearing 167 and the bushing 168. One end of the torsion coil spring 130 is stopped by the first auxiliary shift lever 161, and the other end is stopped by the second auxiliary shift lever 162. As a result, the first auxiliary shift lever 161 and the second auxiliary shift lever 162 are energized in opposite directions from one another (the play-out directions of the inner cables 123a and 123b). Here, since the two auxiliary shift levers 161 and 162 rotate in opposite directions, a single torsion coil spring 163 can serve as the two energization means for energizing the two levers 161 and 162.

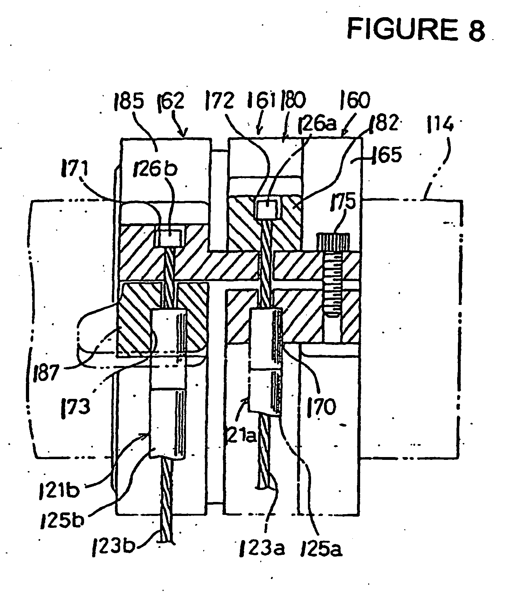

As shown in Figure 8, an outer stopping component 170 and an inner stopping component 171 that extend in the axial direction of the bar end 114 are formed in the fastening component 165. The outer stopping component 170 stops the distal end of the outer casing 125a of the control cable 121a. The inner cable 123a of this control cable 121a is stopped by an inner stopping component 172 formed on the peripheral surface of the first auxiliary shift lever 161. The inner stopping component 171 stops the drum 126b at the distal end of the inner cable 123b of the control cable 121b. The outer casing 125b of this control cable 121b is stopped by an outer stopping component 173 provided to the second auxiliary shift lever 162. The fastening component 165 is fastened to the bar end 114 by a fastening bolt 175.

The first auxiliary shift lever 161 has a ring component 180 and an auxiliary control component 181 that extends outward from the ring component 180 in the radial direction. A stopper 182 that strikes the fastening component 165 is provided to the outer peripheral surface of this ring component 180 such that it protrudes outward, and the inner stopping component 172 is formed at this stopper 182. This first auxiliary shift lever 161 is energized by the torsion coil spring 163 and is always disposed at the location where the stopper 182 strikes the fastening component 165.

The second auxiliary shift lever 162 has a ring component 185 and an auxiliary control component 186 that extends outward from the ring component 185 in the approximate radial direction. The auxiliary control component 186 is formed on the opposite side from the auxiliary control component 181 with respect to the axial center. A stopper 187 is formed at the base of the auxiliary control component 186. The stopper 187 strikes the fastening component 165. The outer stopping component 173 is formed in this stopper 187. This second auxiliary shift lever 162 is energized by the torsion coil spring 163 and is always disposed at the location where the stopper 187 strikes the fastening component 165.

The actuation during a shift will now be described.

When the first shift lever 133 of the main shift control devices 110r and 110f is rotationally operated in the direction of arrow B in Figure 4 (downward) by the thumb, for example, the winder 131 is rotated in the winding direction (the direction of arrow A in Figure 5) by the feed pawl 146. As a result, the inner cable 140a of the shift cable 140 is pulled, and the front derailleur or rear moves upward, for example. In the case of a front derailleur, the chain guide of the front derailleur moves from a smaller diameter gear toward a larger diameter gear and from the inner cable toward the outer casing. In the case of a rear derailleur, chain guide of the rear derailleur moves from a smaller diameter gear toward a larger diameter gear and from the outer casing toward the inner cable. When the feed pawl 146 moves the winder 131, the release pawl 150 restricts the rotation of the winder 131 in the line play-out direction at the point when the rotation comes to a halt, while stopping the positioning teeth of the shift gear 137 by one tooth at a time. The winder 131 is positioned rotationally by one stage at a time by this release pawl 150.

Meanwhile, when the first auxiliary shift lever 161 of the auxiliary shift control devices 120f and 120r is rotationally operated in the direction of arrow D in Figure 7 by the thumb, for example, the inner cable 123a of the control cable 121a is pulled and moves in the direction of arrow B in Figure 4, just as when the first shift lever 133 was operated by the thumb. As a result, the inner cable 140a of the shift cable 140 is pulled in the same manner as that described above.

When the second shift lever 134 is rotationally operated in the direction of arrow C by the index finger, for example, the release pawl 150 retracts from the shift gear 137, and at the same time the positioning pawl 151 strikes the shift gear 137. As a result, the winder 131 is halted in a state in which it has rotated slightly in the line play-out direction. At this point, the feed pawl 146 is also retracted from the shift gear 137 by the feed pawl release mechanism 154. When the second shift lever 134 is returned to its home position by the spring 152 in this state, the positioning pawl 151 retracts from the shift gear 137, the release pawl 150* is stopped by the tooth on the upstream side in the line play-out direction of the shift gear 137, and the winder 131 rotates by one tooth in the line play-out direction. As a result, the inner cable 140a of the control cable 140 is played out by one shift step, and the derailleur moves downward. In the case of a front derailleur, for instance, the chain guide moves from a larger gear to a smaller gear and from the outer casing to the inner cable, and in the case of a rear derailleur, the chain guide moves from a larger gear to a smaller gear and from the inner cable to the outer casing.

Meanwhile, when the second auxiliary shift lever 162 of the auxiliary shift control devices 120f and 120r is operated in the direction of arrow E in Figure 7 by the index finger, for example, the outer casing 125b of the control cable 121b is pushed, and the inner cable 123b is relatively pulled. As a result, the second shift lever 134 rotates in the direction of arrow C in Figure 4, the inner cable 140a of the shift cable 140 is played out by the above actuation, and a downshift is made.

Here, the shift control can be performed by either of the main shift control devices 110f and 110r and auxiliary shift control devices 120f and 120r. Furthermore, either of the shift control devices can be used to make a shift by repeating the same actuation from a given position, regardless of the shift step. Therefore, shift control can be performed easily and reliably from two handle positions.

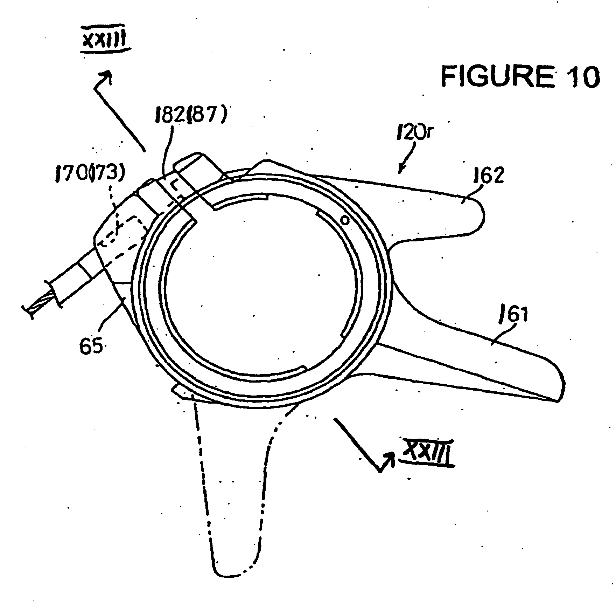

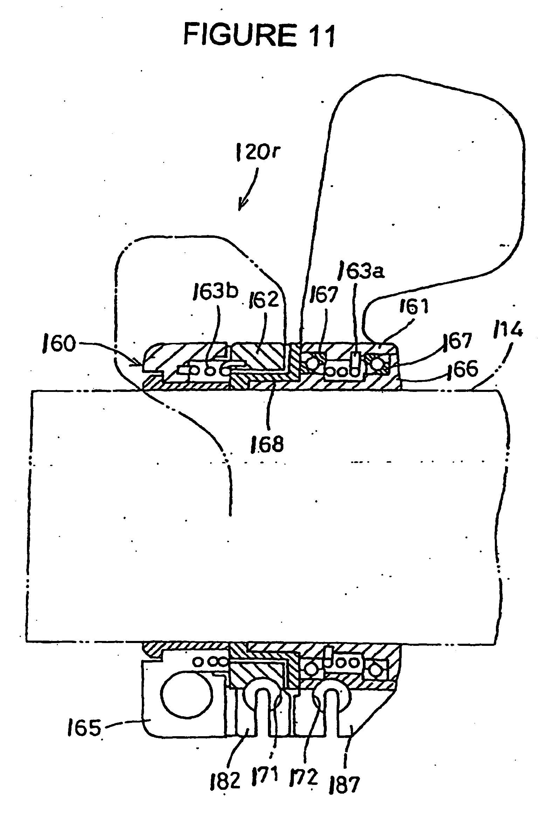

In the above embodiment, the auxiliary shift levers of the auxiliary shift control device were rotated in a different directions, but they may also be rotated in the same direction, as shown in Figures 10 and 11. The routing of the control cables 121 a and 121 b is easier in this case.

In this embodiment, the auxiliary shift control device 120r has an auxiliary control bracket 160, a first auxiliary shift lever 161, a second auxiliary shift lever 162, a first torsion coil spring 163a that is used to return the first auxiliary shift lever 161 to a specific rotational position, and a second torsion coil spring 163b that is used to return the second auxiliary shift lever 162 to a specific rotational position. The auxiliary control bracket 160 has a fastening component 165 and a tube 166 that is fastened by the fastening component 165. A bearing 167 is disposed at a distance on the outer peripheral side of the tube 166, and the first auxiliary shift lever 161 is rotatably supported on the tube 166 by this bearing 167. A bushing 168 is disposed at a distance from the bearing 167 on the outer peripheral side of the tube 166, and the second auxiliary shift lever 162 is rotatably supported on the tube 166 by this bushing 168.

With this structure, the first auxiliary shift lever 161 and the second auxiliary shift lever 162 are provided with stoppers 182 and 187, respectively, that each strike the fastening component 165, and these stoppers 182 and 187 are provided with the inner stopping components 171 and 172 that stop the inner cables 123a and 123b of the control cables 121a and 121 b. The fastening component 165 is provided with two outer casing stopping components 170 and 173 that stop the outer casings 125a and 125b, respectively.

With a structure such as this, when the first auxiliary shift lever 161 is rotationally operated downward as shown by a broken line in Figure 10, the first shift lever 133 rotates via the control cable 121a, and an upshift is made. Conversely, when the second auxiliary shift lever 162 is rotationally operated downward, the control cable 121 b is operated, the second shift lever 134 is operated, and a downshift is made.

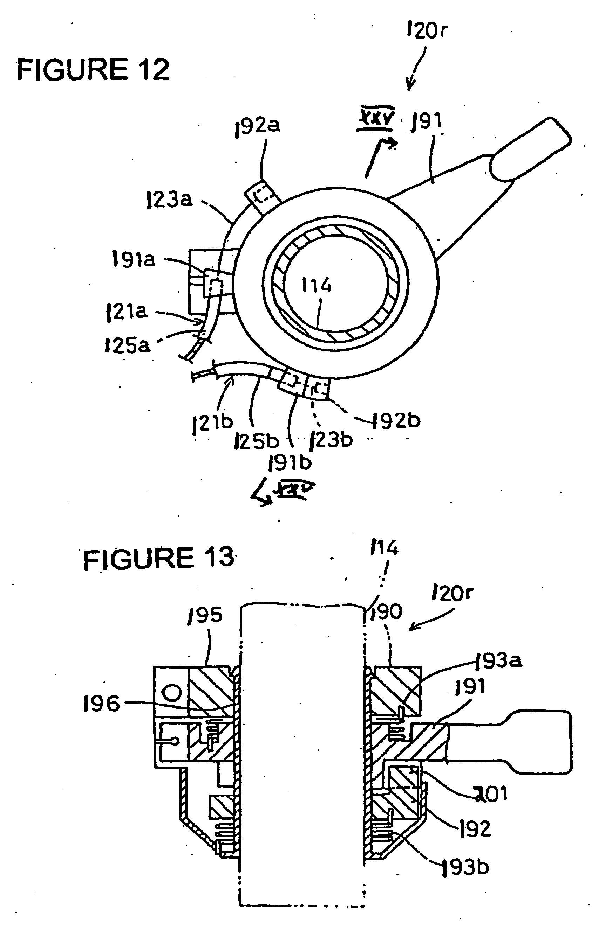

With the above embodiment, a shift was made in the auxiliary shift control device by means of two auxiliary shift levers, but in the following embodiment, the shift control is performed with a single auxiliary shift lever. As shown in Figures 12 to 14, this auxiliary shift control device 120r has a main control bracket 190, an auxiliary shift lever 191 that is rotatably supported on the main control bracket 190, a rotary member 192 that only rotates in conjunction with the rotation of the auxiliary shift lever 191 in one direction, a first torsion coil spring 193a that returns the auxiliary shift lever 191 to a specific position, and a second torsion coil spring 193b that returns the rotary member 192 to a specific position. The main control bracket 190 has a fastening component 195 and a tube 196 that is fastened by the fastening component 195. The lower end of the tube 196 in Figure 13 is formed so as to cover the rotary member 192. The fastening component 195 has outer casing stopping components 191a and 191 b that stop the outer casings of the two control cables 121a and 121b. The auxiliary shift lever 191 has an inner cable stopping component 192a that stops the distal end of the inner cable 123a of the control cable 121a. This inner cable stopping component 192a also functions as a stopper that strikes the fastening component 195. The rotary member 192 has an inner cable stopping component 192b that stops the distal end of the inner cable 123b of the control cable 123b. This inner cable stopping component 192b also functions as a stopper that strikes the fastening component 195.

The auxiliary shift lever 191 has a ring component 198 that is rotatably supported on the tube 196, and a control component 199 that extends from the ring component 198 in the radial direction. An engagement component 200 that is sunken lower than the other portions during a specific angle in the peripheral direction is formed on the rotary member 192 side of the ring component 198. An engagement protrusion 201 is formed around the outer periphery of the rotary member 192 toward this engagement component 200. As a result of the engagement of the engagement protrusion 201 and the engagement component 200, the range of rotation of the rotary member 192 is restricted, the rotary member 192 is energized at a specific position by the second torsion coil spring 193b, and further rotation is prohibited by the stopper, so the rotary member 192 only rotates in conjunction with the counterclockwise rotation (in Figure 14) of the auxiliary shift lever 191, and does not rotate in conjunction with clockwise rotation.

With a structure such as this, when the auxiliary shift lever 191 is rotated clockwise from the specific position indicated by the solid lines in the figure, the rotary member 192 does not rotate, and only the auxiliary shift lever 191 rotates clockwise. As a result, the inner cable 123a of the control cable 121 a is pulled and the first shift lever 133 is actuated. Conversely, when the auxiliary shift lever 191 is rotated counterclockwise from the specific position indicated by the solid lines, the inner cable 123a just goes slack and is not pulled, and the rotary member 192 rotates counterclockwise in conjunction with the rotation of the auxiliary shift lever 191. As a result, the inner cable 123b of the control cable 121 b is pulled and the second shift lever 134 is actuated. With a structure such as this, an upshift or downshift can be made according to the rotational direction of the single control lever, so a shift can be made easily and reliably.

In the above embodiment, the design was such that the control cable 121a was stopped by the auxiliary shift lever 191, but as shown in Figure 15, two rotary members 192a and 192b may be provided, one on either side of the auxiliary shift lever 191, and the control cables 121a and 121b may be stopped by the rotary members 192a and 192b, respectively. In this case, the auxiliary shift lever 191 rotates in both directions, but the rotary member 192a only follows this rotation in one direction of the auxiliary shift lever 191, and the rotary member 192b only follows the rotation in the other direction of the auxiliary shift lever 191. The two rotary members 192a and 192b are energized in opposite directions by the torsion coil spring 193a and 193b. Again in this embodiment, a shift can be made easily and reliably since an upshift or downshift can be made according to the rotational direction of the single control lever.

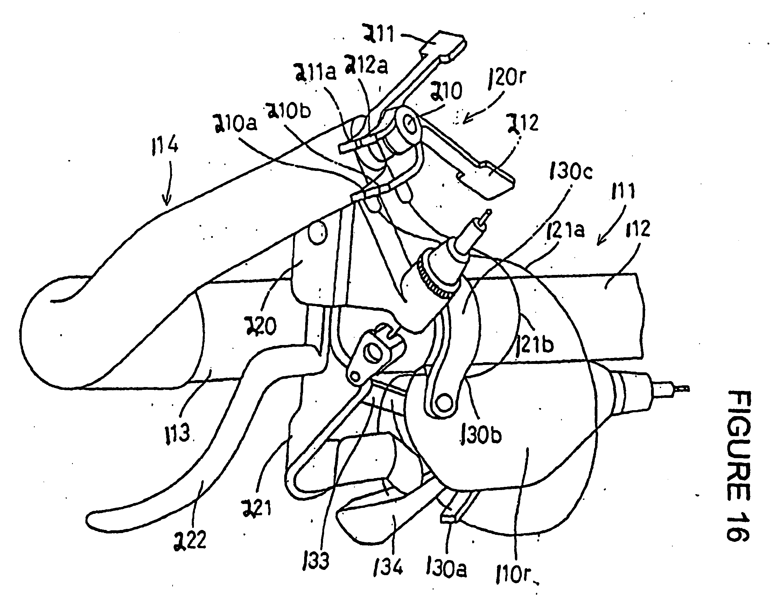

In the above embodiment, the brake lever 121 was only provided to the main bar 112, so shift control could not be performed on the bar end 114 side, but as shown in Figure 16, the main shift control device 110r may be separate from the brake lever 222, and the brake lever 222 may be mounted at the distal end of the bar end 114. Also, the auxiliary shift control device 120r may be mounted directly at the distal end of the bar end 114.

In Figure 16, the main shift control device 110r comprises a main control bracket 130c and a first shift lever 133 and second shift lever 134 that are rotatably supported inside the main control bracket 130c. The main control bracket 130c is provided with outer casing stopping components 130a and 130b that stop the outer casings of the two control cables 121a and 121b. The rest of the structure is the same as that in the main shift control device described above, and as such will not be described here.

The auxiliary shift control device 120r has a rotary bracket 210 fixed to the distal end of the bar end 114, and a first auxiliary shift lever 211 and second auxiliary shift lever 212 that are rotatably supported by the rotary bracket 210. The first auxiliary shift lever 211 and second auxiliary shift lever 212 each can be returned to a specific position by a spring (not shown), and the rotational operation thereof begins from this specific position. The first auxiliary shift lever 211 and second auxiliary shift lever 212 are provided with inner cable stopping components 211a and 212a, respectively. The auxiliary control bracket 210 is provided with outer casing stopping components 210a and 21 0b.

Meanwhile, a brake bracket 220 and the bar end 114 are mounted integrally or separately to the distal end of the bar end 114. A first brake lever 221 that extends to the grip 113 side, and a second brake lever 222 that extends along the bar end 114, are integrally and rotatably supported by the brake bracket 220. With a structure such as this, shift control and braking control can both be performed with the bar end 114, so shift control and braking control can both be performed easily and reliably from two handle positions.

While the above is a description of various embodiments of the present invention, further modifications may be employed without departing from the scope of the present invention as defined by the claims. Although the interlocking of the shifting control device and shifting control device was effected with the cable in the embodiments described above, it may also be effected by another method, such as where the wire-winding drum and the shifting control lever are interlocked by a rod, or where a winding drum (no wire) driven by a shift control lever and the wire-winding drum are interlocked with a rod or push-pull cable.

Furthermore, in the embodiments shown in Figures 1-16, the auxiliary shift control devices 120f and 120r were mounted to the bar end 114 of a mountain bike, but the present invention is not limited to this, and the auxiliary shift control devices may instead be mounted to the DH bar (also known as an aero bar) of a road bike. Also, the auxiliary shift control devices 120f and 120r were mounted to the bar end 114, and the main shift control devices 110f and 110r were mounted to the main bar 112, but the present invention is not limited to this, and the main shift control devices 110f and 110r may instead be mounted to the bar end 114, and the auxiliary shift control devices 120f and 120r to the main bar 112.

Thus, the scope of the invention should not be limited by the specific structures disclosed. Instead, the true scope of the invention should be determined by the following claims. Of course, although labeling symbols are used in the claims in order to facilitate reference to the figures, the present invention is not intended to be limited to the constructions in the appended figures by such labeling.

## Claims

1. A bicycle shifting control apparatus for a bicycle transmission, the apparatus comprising:
a first shift control device (110r) located at a first position on the bicycle, the first shift control device including a first shift lever (133) and a second shift lever (134) for causing the first shift control device (110r) to operate a transmission shift cable (140);
a winder (131), wherein the winder (131) pulls the cable (140) in response to rotation of the first shift lever (133), and wherein the winder (131) releases the cable (140) in response to rotation of the second shift lever (134); and
a second shift control device (120r) located at a second position on the bicycle, the second shift control device (120r) including shift control means (161, 191, 211) for causing the second shift control device (120r) to operate a first control cable (121a),
**characterised in that:**
the second shift control device (120r) includes shift control means (162, 191, 212) for causing the second shift control device (120r) to operate a second control cable (121b), and
the apparatus further comprises interlocking means (145a, 147a) for interlocking the first shift lever (133) and the shift control means (161, 191, 211) and for interlocking the second shift lever (134) and the shift control means (162, 191, 212) so that movement of either the first shift lever (133) or the second shift lever (134) or the shift control means (161, 162, 191, 211, 212) causes the first shift control device (110r) to operate the transmission shift cable (140).

2. The apparatus according to claim 1 wherein the first shift control device (110r) is adapted to pull the transmission shift cable (140) in response to movement of the first shift lever (133), and wherein the first shift control device (110r) is adapted to release the transmission shift cable (140) in response to movement of the second shift lever (134).

3. The apparatus according to claim 2, wherein the interlocking means (145a, 147a) couples the first control cable (121a) and the second control cable (121b) to the first shift control device (110r) so that rotating a primary rotating member (191) of the second shift control device (120r) in one direction causes the first shift control device (110r) to pull the transmission cable (140), and rotating the primary rotating member (191) in an opposite direction causes the first shift control device (110r) to release the transmission cable (140).

4. The apparatus according to claim 3 wherein the interlocking means (145a, 147a) couples the first control cable (121a) and the second control cable (121b) to the first shift control device (110r) so that rotating the primary rotating member (191) in one direction rotates only the first shift lever (133), and rotating the primary rotating member (191) in an opposite direction rotates only the second shift lever (134).

5. The apparatus according to either of claims 1 or 2 wherein the second shift control device (120r) includes third and fourth shift levers (161, 162, 211, 212) for causing the second shift control device (120f; 120r) to operate the first and second control cable (121a, 121b), and wherein the interlocking means (145a, 147a) interlocks the first shift control device (110r) and the second shift control device (120r) so that movement of either the first shift lever (133), the second shift lever (134), the third shift lever (161, 211) or the fourth shift lever (162, 212) causes the first shift control device (110r) to operate the transmission shift cable (140).

6. The apparatus according to claim 5 wherein the interlocking means (145a) connects the first control cable (121a) to the first shift control device (110r) so that movement of the third shift lever (161, 211) causes the first shift control device (110r) to pull the transmission shift cable (140), and wherein the interlocking means (147a) connects the second control cable (121b) to the first shift control device (110r) so that movement of the fourth shift lever (162, 212) causes the first shift control device (110r) to release the transmission shift cable (140).

7. The apparatus according to either of claims 5 or 6 wherein the interlocking means (145a, 147a) comprises:
a first coupler (145a) for coupling the first control cable (121a) to the first shift lever (133); and
a second connector (147a) for connecting the second control cable (121b) to the second shift lever (134).

8. The apparatus according to Claim 7 wherein the first shift lever (133) and the second shift lever (134) are rotatably supported on a main bracket (130) and wherein the main bracket (130) includes:
a first stopper (130a) for stopping an outer casing (125a) of the first control cable (121a); and
a second stopper (130b) for stopping an outer casing of the second control cable (121b).

9. The apparatus according to claim 7 or 8; wherein the second shift control device (120r) includes:
a mounting member (165, 195, 210) adapted to rotably mount the third shift lever (161) to a handlebar (114); and
a third coupler (172) for coupling the third shift lever (161) to the first control cable (121a).

10. The apparatus according to claim 9 wherein the third and fourth shift levers (161, 162) rotate in a same direction to operate the first and second control cables (121a, 121b).

11. The apparatus according to claim 9 wherein the third and fourth shift levers (161, 162) rotate in opposite directions to operate the first and second control cables (121a, 121b).

12. The apparatus according to any one of Claims 9 to 11 wherein the second shift control device further comprises a fourth coupler (173) for coupling the fourth shift lever (162) to the second control cable (121b).

13. The apparatus according to claim 12 wherein the third coupler (172) is disposed on the third shift lever (161).

14. The apparatus according to claim 12 or claim 13, wherein the fourth coupler (173) is disposed on the fourth shift lever (162).

15. The apparatus according to claims 3 or 4 wherein the primary rotating member (191) causes rotation of a rotary member (192) when the primary rotating member (191) rotates in a selected direction.

16. The apparatus according to claims 3 or 4 wherein the second shift control device (120r) includes:
a first rotary member (192a) and
a second rotary member (192b), one on either side of the primary rotating member (191);
a third coupler disposed on the first rotary member (192a); and
a fourth coupler disposed on the second rotary member (192b).

17. The apparatus according to claim 16 wherein the primary rotating member (191) causes rotation of the first rotary member (192a) when the primary rotating member (191) rotates in a first direction, and wherein the primary rotating member (191) causes rotation of the second rotary member (192b) when the primary rotating member (191) rotates in an opposite second direction.

18. The apparatus according claim 15,16 or 17 wherein the primary rotating member (191) comprises an auxiliary shift lever (191), the apparatus further comprising a biasing mechanism (193a, 193b) for biasing the auxiliary shift lever (191) to an initial position.

## Patentansprüche

1. Fahrradschaltsteuervorrichtung für eine Fahrradgangschaltung, wobei die Vorrichtung aufweist:
eine erste Schaltsteuervorrichtung (110r), die sich in einer ersten Position am Fahrrad befindet, wobei die erste Schaltsteuervorrichtung einen ersten Schalthebel (133) und einen zweiten Schalthebel (134) beinhaltet, um die erste Schaltsteuervorrichtung (110r) zu veranlassen, ein Gangschaltungs-Schaltkabel (140) zu betätigen;
eine Aufwickeleinrichtung (131), wobei die Aufwickeleinrichtung (131) das Kabel (140) ansprechend auf eine Rotation des ersten Schalthebels (133) einzieht, und wobei die Aufwickeleinrichtung (131) das Kabel (140) ansprechend auf eine Rotation des zweiten Schalthebels (134) nachlässt; und
eine zweite Schaltsteuervorrichtung (120r), die sich in einer zweiten Position am Fahrrad befindet, wobei die zweite Schaltsteuervorrichtung (120r) eine Schaltsteuereinrichtung (161, 191, 211) beinhaltet, um die zweite Schaltsteuervorrichtung (120r) zu veranlassen, ein erstes Steuerkabel (121a) zu betätigen,
**dadurch gekennzeichnet, das:**
die zweite Schaltsteuervorrichtung (120r) eine Schaltsteuereinrichtung (162, 191, 212) beinhaltet, um die zweite Schaltsteuervorrichtung (120r) zu veranlassen, ein zweites Steuerkabel (121b) zu betätigen, und
die Vorrichtung weiter eine Verriegelungseinrichtung (145a, 147a) zum Verriegeln des ersten Schalthebels (131) und der Schaltsteuereinrichtung (161, 191, 211) und zum Verriegeln des zweiten Schalthebels (134) und der Schaltsteuereinrichtung (162, 191, 212) beinhaltet, so dass eine Bewegung entweder des ersten Schalthebels (133) oder des zweiten Schalthebels (134) oder der Schaltsteuereinrichtung (161, 162, 191, 211, 212) die erste Schaltsteuervorrichtung (110r) veranlasst, das Gangschaltungs-Schaltkabel (140) zu betätigen.

2. Vorrichtung nach Anspruch 1, bei der die erste Schaltsteuervorrichtung (110r) ausgebildet ist, um das Gangschaltungs-Schaltkabel (140) ansprechend auf eine Bewegung des ersten Schalthebels (133) einzuziehen, und wobei die erste Schaltsteuervorrichtung (110r) ausgebildet ist, um das Gangschaltungs-Schaltkabel (140) ansprechend auf eine Bewegung des zweiten Schalthebels (134) nachzulassen.

3. Vorrichtung nach Anspruch 2, bei welcher die Verriegelungseinrichtung (145a, 147a) das erste Steuerkabel (121a) und das zweite Steuerkabel (121b) mit der ersten Schaltsteuervorrichtung (110r) verbindet, so dass ein Drehen eines primären Drehelementes (191) der zweiten Schaltsteuervorrichtung (120r) in einer Richtung die erste Schaltsteuervorrichtung (110r) veranlasst, das Schaltkabel (140) einzuziehen, und ein Drehen des primären Drehelementes (191) in einer entgegengesetzten Richtung die Schaltsteuervorrichtung (110r) veranlasst, das Gangschaltungskabel (140) freizugeben.

4. Vorrichtung nach Anspruch 3, bei der die Verriegelungseinrichtung (145a, 147a) das erste Steuerkabel (121a) und das zweite Steuerkabel (121b) mit der ersten Schaltsteuervorrichtung (110) verbindet, so dass ein Drehen des primären Drehelementes (191) in einer Richtung lediglich den ersten Schalthebel (133) rotiert, und ein Rotieren des primären Drehelementes (191) in einer entgegengesetzten Richtung lediglich den zweiten Schalthebel (134) rotiert.

5. Vorrichtung nach einem der Ansprüche 1 oder 2, bei der die zweite Schaltsteuervorrichtung (120r) dritte und vierte Schalthebel (161, 162, 211, 212) beinhaltet, um die zweite Schaltsteuervorrichtung (120f, 120r) zu veranlassen, das erste und zweite Steuerkabel (121a, 121b) zu betätigen, und wobei die Verriegelungseinrichtung (145a, 147a) die erste Schaltsteuervorrichtung (110r) und die zweite Schaltsteuervorrichtung (120r) verriegelt, so dass eine Bewegung entweder des ersten Schalthebels (133), des zweiten Schalthebels (134), des dritten Schalthebels (161, 211) oder des vierten Schalthebels (162, 212) die erste Schaltsteuervorrichtung (110r) veranlasst, das Gangschaltungs-Schaltkabel (140) zu betätigen.

6. Vorrichtung nach Anspruch 5, bei der die Verriegelungseinrichtung (145a) das erste Steuerkabel (121a) mit der ersten Schaltsteuervorrichtung (110r) verbindet, so dass eine Bewegung des dritten Schalthebels (161, 211) die erste Schaltsteuervorrichtung (110r) veranlasst, das Gangschaltungs-Schaltkabel (140) einzuziehen, und wobei die Verriegelungseinrichtung (147a) das zweite Steuerkabel (121b) mit der ersten Schaltsteuervorrichtung (110r) verbindet, so dass eine Bewegung des vierten Schalthebels (162, 212) die erste Schaltsteuervorrichtung (110r) veranlasst, das Gangschaltungs-Schaltkabel (140) freizugeben.

7. Vorrichtung nach einem der Ansprüche 5 oder 6, bei der die Verriegelungseinrichtung (145a, 147a) aufweist:
eine erste Kopplungseinrichtung (145a), welche das erste Steuerkabel (121a) mit dem ersten Schalthebel (133) verbindet; und
eine zweite Verbindungseinrichtung (147a), welche das zweite Steuerkabel (121b) mit dem zweiten Schalthebel (134) verbindet.

8. Vorrichtung nach Anspruch 7, bei der der erste Schalthebel (133) und der zweite Schalthebel (134) an einem Hauptbeschlag (130) drehbar gelagert sind, und wobei der Hauptbeschlag (130) beinhaltet:
eine erste Anschlageinrichtung (130a), an die ein äußeres Gehäuse (125a) des ersten Steuerkabels (121a) anschlägt; und
eine zweite Anschlageinrichtung (130b), an die ein äußeres Gehäuse des zweiten Steuerkabels (121b) anschlägt.

9. Vorrichtung nach Anspruch 7 oder 8, bei welcher die zweite Schaltsteuervorrichtung (120r) beinhaltet:
ein Befestigungselement (165, 195, 210), das ausgebildet ist, um den dritten Schalthebel (161) an einer Lenkstange (114) drehbar zu montieren; und
eine dritte Kopplungseinrichtung (172), welche den dritten Schalthebel (161) mit dem ersten Steuerkabel (121a) koppelt.

10. Vorrichtung nach Anspruch 9, bei der die dritten und vierten Schalthebel (161, 162) in einer gleichen Richtung rotieren, um die ersten und zweiten Steuerkabel (121a, 121b) zu betätigen.

11. Vorrichtung nach Anspruch 9, bei der die dritten und vierten Schalthebel (161, 162) in entgegengesetzten Richtungen rotieren, um die ersten und zweiten Steuerkabel (121a, 121b) zu betätigen.

12. Vorrichtung nach einem der Ansprüche 9 bis 11, bei der die zweite Schaltsteuervorrichtung weiter eine vierte Kopplungseinrichtung (173) aufweist, um den vierten Schalthebel (162) mit dem zweiten Steuerkabel (121b) zu verbinden.

13. Vorrichtung nach Anspruch 12, bei der die dritte Kopplungseinrichtung (172) am dritten Schalthebel (161) angeordnet ist.

14. Vorrichtung nach Anspruch 12 oder Anspruch 13, bei der die vierte Kopplungseinrichtung (173) am vierten Schalthebel (162) angeordnet ist.

15. Vorrichtung nach einem der Ansprüche 3 oder 4, bei der das primäre Drehelement (191) ein Rotieren eines Drehelementes (192) veranlasst, wenn das primäre Drehelement (191) in einer ausgewählten Richtung rotiert.

16. Vorrichtung nach den Ansprüchen 3 oder 4, bei der die zweite Schaltsteuervorrichtung (120r) beinhaltet:
ein erstes Drehelement (192a) und
ein zweites Drehelement (192b), eines auf jeder Seite des primären Drehelementes (191);
eine dritte Kopplungseinrichtung, die am ersten Drehelement (192a) angeordnet ist; und
eine vierte Kopplungseinrichtung, die am zweiten Drehelement (192b) angeordnet ist.

17. Vorrichtung nach Anspruch 16, bei der das primäre Drehelement (191) eine Rotation des ersten Drehelementes (192a) veranlasst, wenn das primäre Drehelement (191) in einer ersten Richtung rotiert, und bei der das primäre Drehelement (191) eine Rotation des zweiten Drehelementes (192b) veranlasst, wenn das primäre Drehelement (191) in einer entgegengesetzten zweiten Richtung rotiert.

18. Vorrichtung nach Anspruch 15, 16 oder 17, bei der das primäre Drehelement (191) einen Hilfsschalthebel (191) aufweist, wobei die Vorrichtung weiter einen Vorspannmechanismus (193a, 193b) aufweist, um den Hilfsschalthebel (191) in eine anfängliche Position vorzuspannen.

## Revendications

1. Dispositif de commande de changement de vitesse pour bicyclettes, le dispositif comprenant :
un premier dispositif de commande de changement (110r) situé à une première position sur la bicyclette, le premier dispositif de commande de changement incluant un premier levier de changement (133) et un second levier de changement (134) pour amener le premier dispositif de commande de changement (110r) à actionner un câble de changement de vitesse (140) ;
un enrouleur (131), dans lequel l'enrouleur (131) tire le câble (140) en réponse à la rotation du premier levier de changement (133), et dans lequel l'enrouleur (131) relâche le câble (140) en réponse à la rotation du second levier de changement (134) ; et
un deuxième dispositif de commande de changement (120r) situé à une seconde position sur la bicyclette, le second dispositif de commande de changement (120r) incluant des moyens de commande de changement (161, 191, 211) pour amener le second dispositif de commande de changement (120r) à actionner un premier câble de commande (121a),
**caractérisé en ce que:**
le second dispositif de commande de changement (120r) inclut des moyens de commande de changement (162, 191, 212) pour amener le second dispositif de commande de changement (120r) à actionner un second câble de commande (121b), et
le dispositif comprend en outre des moyens d'interverrouillage (145a, 147a) pour interverrouiller le premier levier de changement (133) et les moyens de commande de changement (161, 191, 211) et pour interverrouiller le second levier de changement (134) et les moyens de commande de changement (162, 191, 212) de sorte qu'un mouvement soit du premier levier de changement (133) soit du second levier de changement (134), soit encore des moyens de commande de changement (161, 162, 191, 211, 212) amène le premier dispositif de commande de changement (110r) à actionner le câble de changement de vitesse (140).

2. Dispositif selon la revendication 1, dans lequel le premier dispositif de commande de changement (110r) est adapté à tirer le câble de changement de vitesse (140) en réponse au mouvement du premier levier de changement (133), et dans lequel le premier dispositif de commande de changement (110r) est adapté à relâcher le câble de changement de vitesse (140) en réponse au mouvement du second levier de changement (134).

3. Dispositif selon la revendication 2, dans lequel les moyens d'interverrouillage (145a, 147a) accouplent le premier câble de commande (121a) et le second câble de commande (121b) au premier dispositif de commande de changement (110r) de sorte que la rotation d'un élément rotatif primaire (191) du second dispositif de commande de changement (120r) dans une direction amène le premier dispositif de commande de changement (110r) à tirer le câble de transmission (140), et la rotation de l'élément rotatif primaire (191) dans une direction opposée amène le premier dispositif de commande de changement (110r) à relâcher le câble de changement de vitesse (140).

4. Dispositif selon la revendication 3, dans lequel les moyens d'interverrouillage (145a, 147a) accouplent le premier câble de commande (121a) et le second câble de commande (121b) au premier dispositif de commande de changement (110r) de sorte que la rotation de l'élément rotatif primaire (191) dans une direction fait tourner uniquement le premier levier de changement (133), et la rotation de l'élément rotatif primaire (191) dans une direction opposée fait tourner uniquement le second levier de changement (134).

5. Dispositif selon l'une ou l'autre des revendications 1 et 2, dans lequel le second dispositif de commande de changement (120r) inclut un troisième et un quatrième levier de changement (161, 162, 211, 212) pour amener le second dispositif de commande de changement (120f, 120r) à actionner le premier et le second câble de commande (121a, 121b), et dans lequel les moyens d'interverrouillage (145a, 147a) réalisent un interverrouillage du premier dispositif de commande de changement (110r) et du second dispositif de commande de changement (120r) de sorte qu'un mouvement soit du premier levier de changement (133), soit du second levier de changement (134), soit du troisième levier de changement (161, 211), soit encore du quatrième levier de changement (162, 212) amène le premier dispositif de commande de changement (110r) à actionner le premier câble de changement de vitesse (140).

6. Dispositif selon la revendication 5, dans lequel les moyens d'interverrouillage (145a) connectent le premier câble de commande (121a) au premier dispositif de commande de changement (110r) de manière qu'un mouvement du troisième levier de changement (161, 211) amène le premier dispositif de commande de changement (110r) à tirer le câble de changement de vitesse (140), et dans lequel les moyens d'interverrouillage (147a) connectent le second câble de commande (121b) au premier dispositif de commande de changement (110r) de manière qu'un mouvement du quatrième levier de changement (162, 212) amène le premier dispositif de commande de changement (110r) à relâcher le câble de changement de vitesse (140).

7. Dispositif selon l'une ou l'autre des revendications 5 et 6, dans lequel les moyens d'interverrouillage (145a, 147a) comprennent :
un premier coupleur (145a) pour coupler le premier câble de commande (121a) au premier levier de changement (133) ; et
un second connecteur (147a) pour connecter le second câble de commande (121b) au second levier de changement (134).

8. Dispositif selon la revendication 7, dans lequel le premier levier de changement (133) et le second levier de changement (134) sont supportés en rotation sur une platine principale (130), et dans lequel la platine principale (130) inclut :
un premier arrêt (130a) pour arrêter une gaine extérieure (125a) du premier câble de commande (121r) ; et
un second arrêt (130b) pour arrêter une gaine extérieure du second câble de commande (121b).

9. Dispositif selon l'une ou l'autre des revendications 7 et 8, dans lequel le second dispositif de commande de changement (120r) inclut :
un élément de montage (165, 195, 210) adapté à monter en rotation le troisième levier de changement (161) sur un guidon (114) ; et
un troisième coupleur (172) pour coupler le troisième levier de changement (161) au premier câble de commande (121a).

10. Dispositif selon la revendication 9, dans lequel le troisième et le quatrième levier de changement (161, 162) tournent dans une même direction pour actionner le premier et le second câble de commande (121a, 121b).

11. Dispositif selon la revendication 9, dans lequel le troisième et le quatrième levier de changement (161, 162) tournent dans des directions opposées pour actionner le premier et le second câble de commande (121a, 121b).

12. Dispositif selon l'une quelconque des revendications 9 à 11, dans lequel le second dispositif de commande de changement comprend encore un quatrième coupleur (173) pour coupler le quatrième levier de changement (162) au second câble de commande (121b).

13. Dispositif selon la revendication 12, dans lequel le troisième coupleur (172) est disposé sur le troisième levier de changement (161).

14. Dispositif selon l'une ou l'autre des revendications 12 et 13, dans lequel le quatrième coupleur (173) est disposé sur le quatrième levier de changement (162).

15. Dispositif selon l'une ou l'autre des revendications 3 et 4, dans lequel l'élément rotatif primaire (191) entraîne une rotation d'un élément rotatif (192) quand l'élément rotatif primaire (191) tourne dans une direction choisie.

16. Dispositif selon l'une ou l'autre des revendications 3 et 4, dans lequel le second dispositif de commande de changement (120r) inclut :
un premier élément rotatif (192a) et un second élément rotatif (192b), situés de part et d'autre de l'élément rotatif primaire (191) ;
un troisième coupleur disposé sur le premier élément rotatif (192a) ; et
un quatrième coupleur disposé sur le second élément rotatif (192b).

17. Dispositif selon la revendication 16, dans lequel l'élément rotatif primaire (191) provoque une rotation du premier élément rotatif (192a) quand l'élément rotatif primaire (191) tourne dans une première direction, et dans lequel l'élément rotatif primaire (191) provoque une rotation du second élément rotatif (192b) quand l'élément rotatif primaire (191) tourne dans une seconde direction opposée.

18. Dispositif selon l'une des revendications 15, 16 et 17, dans lequel l'élément rotatif primaire (191) comprend un levier de changement auxiliaire (191), le dispositif comprenant encore un mécanisme de sollicitation (193a, 193b) pour solliciter le levier de changement auxiliaire (191) vers une position initiale.
